# FASCICULE DE BREVET EUROPEEN

(11) **EP 2 253 201 B1**
(45) Date de publication et mention de la délivrance du brevet: **20.07.2016**
(21) Numéro de dépôt: 10305523.2
(22) Date de dépôt: 18.05.2010
(51) Int. Cl.: A01K 7/06

(54) **Abreuvoir automatique pour bétail, du type à palette**
Automatische Viehtränke mit einer Druckplatte
Automatic drinking trough for livestock with activating plate

(30) Priorité: 18.05.2009 FR 0902386; 18.05.2009 FR 0902388
(43) Date de publication de la demande: 24.11.2010
(73) Titulaire: Polymoule, 72550 Coulans sur Gee (FR)
(72) Inventeur: Cosnet, Gilbert, 72550 Degre (FR)
(74) Mandataire: Michelet, Alain

(56) Documents cités:
- DE-A1- 3 338 483
- DE-U1-202004 014 668
- GB-A- 1 525 630
- GB-A- 2 176 384
- US-A- 3 144 003

## Description

La présente invention concerne les abreuvoirs automatiques pour le bétail. Elle concerne plus particulièrement un abreuvoir du genre comprenant un bol muni de moyens de fixation sur un support et de moyens d'alimentation en eau, lesquels moyens d'alimentation en eau comprennent un corps définissant une conduite interne d'alimentation, lequel corps est équipé, au niveau de son extrémité arrière, située à l'extérieur dudit bol, d'un dispositif de raccordement à une tubulure d'amenée d'eau, et au niveau de son extrémité avant, située dans ledit bol ou au-dessus de celui-ci, d'au moins un dispositif de manoeuvre du type à obturateur mobile associé à un ressort de rappel, lequel obturateur est actionné par une palette dont l'une des extrémités est articulée autour d'un axe et dont la face arrière est équipée d'une butée coopérant avec ledit obturateur pour assurer l'ouverture de ce dernier lors d'une poussée appliquée sur ladite palette, en particulier par le bétail.

De tels abreuvoirs automatiques à palette sont par exemple décrits dans les documents FR-2 420 304 et FR-2 388 462.
Dans ces dispositifs antérieurs, l'extrémité supérieure de la palette est articulée directement sur le bol d'abreuvoir, par l'intermédiaire d'oreilles monobloc spécifiquement ménagées à l'intérieur de ce dernier.

Un autre abreuvoir de ce genre est décrit dans le document GB-2 176 384. Il s'agit ici d'un contenant en forme de bol longitudinal permettant l'abreuvement de plusieurs animaux à la fois, équipé d'une pluralité de palettes à tube réparties sur sa longueur ; en outre, une palette longitudinale commune est prévue pour permettre l'actionnement des différentes palettes à tube. Cette palette longitudinale commune s'étend sur toute la longueur du bol et elle est montée articulée sur les côtés latéraux de ce bol.

On connaît encore d'autres abreuvoirs à palette, décrits par exemple dans les documents US-1 824 116, DE-295 09070 ou US-2 764 960, dans lesquels la palette est montée articulée à l'extrémité du corps d'alimentation, et actionne de manière axiale la tige de commande de l'obturateur mobile.

Cependant, de tels montages rendent le bol spécifique et par conséquent ne lui permet pas d'accepter d'autres systèmes poussoirs comme par exemple un tube.

Cette spécificité entraîne un surcoût important du fait de la nécessité d'utiliser des outillages particuliers pour les bols prévus pour recevoir des systèmes poussoirs à tube. Ce défaut de polyvalence ne permet pas non plus à l'éleveur de remplacer le système à palette par un système à poussoir pour attribuer l'abreuvoir à d'autres animaux dans son exploitation.

Un abreuvoir polyvalent, apte à être équipé soit d'une palette pivotante, soit d'une palette à tube, est décrit dans le document DE-20 2004 014 668.
Le corps d'alimentation en eau de cet abreuvoir est équipé - d'un premier orifice en communication avec la conduite interne d'alimentation en eau, apte à recevoir un premier obturateur mobile adapté pour être actionné par une palette pivotante amovible, et - d'un second orifice, également en communication avec la conduite interne d'alimentation en eau, apte à recevoir, en remplacement du premier obturateur, un second obturateur mobile associé à une palette à tube.
Selon une variante de réalisation, il est prévu qu'un seul orifice soit réalisé dans le corps d'alimentation pour permettre, au choix, de monter un obturateur déclenché par palette pivotante ou un obturateur déclenché par une palette à tube.

Pour remédier à ces inconvénients, la présente invention propose un abreuvoir automatique pour bétail, du type comprenant un bol muni de moyens de fixation sur un support et de moyens pour assurer son alimentation en eau, lesquels moyens d'alimentation en eau comprennent un corps définissant une conduite interne d'alimentation, lequel corps est équipé, au niveau de son extrémité arrière, située à l'extérieur dudit bol, d'un dispositif de raccordement à une tubulure d'amenée d'eau, et au niveau de son extrémité avant, située dans ledit bol, ou au-dessus de celui-ci, d'au moins un dispositif de manoeuvre du type à obturateur mobile associé à-un ressort de rappel, - un joint d'étanchéité, et - une tige de commande, l'extrémité avant dudit corps étant encore munie de moyens pour la réception articulée, autour d'un axe horizontal, d'une palette d'actionnement de ladite tige de commande ; et cet abreuvoir est caractérisé par le fait que ladite tige de commande comporte une partie qui fait saillie vers le bas, hors dudit corps d'alimentation, laquelle partie saillante est apte à basculer autour d'un axe situé approximativement sur ledit obturateur mobile pour assurer l'ouverture de ce dernier lors d'une poussée appliquée sur le côté de ladite partie saillante de tige ; en outre, cette partie saillante de tige comporte des moyens pour la fixation amovible d'une palette à tube, et les moyens de fixation de ladite palette articulée sont également prévus amovibles, pour permettre l'utilisation, au choix, soit d'une palette à tube, soit d'une palette articulée, pour l'actionnement dudit obturateur mobile.

La partie saillante de la tige de commande comporte avantageusement une extrémité libre munie d'un filetage pour permettre la fixation de la palette à tube par un écrou.

D'autre part, de préférence, la face arrière de la palette articulée est équipée d'une butée apte à venir coopérer avec la partie saillante de tige, pour assurer son basculement en vue d'ouvrir l'obturateur lors d'une poussée appliquée sur ladite palette, en particulier par le bétail.
Dans ce cadre, la butée en question est de préférence constituée par le fond d'une échancrure réalisée dans un talon monobloc ménagé au niveau de la face arrière de la palette articulée.

Selon une autre particularité, la tige de commande s'étend de manière inclinée par rapport à la verticale, en direction de la partie inférieure de la palette articulée, l'inclinaison correspondante étant comprise entre 5 et 30°.

Selon une forme de réalisation particulière, le corps d'alimentation comporte un orifice d'axe horizontal, traversant toute sa largeur au niveau de son extrémité avant ; et la palette articulée comporte deux flasques latéraux parallèles, écartés d'une distance correspondant, au jeu près, à ladite largeur de l'extrémité avant du corps d'alimentation, et munis chacun d'un orifice en vis-à-vis qui s'étendent coaxialement, pour assurer le montage articulé de ladite palette sur ledit corps d'alimentation, au moyen d'un axe s'étendant au travers desdits orifices de palette et dudit orifice du corps d'alimentation, disposés coaxialement.
De préférence, l'axe de montage en question consiste en un corps de vis d'un système de fixation type vis-écrou.

Selon une autre particularité, le corps d'alimentation présente une section générale rectangulaire, munie de deux faces latérales, d'une face de dessus et d'une face de dessous, l'orifice de fixation de la palette articulée étant ménagé au travers desdites faces latérales.

Toujours selon une forme de réalisation particulière, l'extrémité avant du corps d'alimentation est en forme de portion de cylindre centrée sur l'axe de l'orifice traversant assurant la fixation de la palette, laquelle portion de cylindre est au moins partiellement recouverte par un élément de paroi de ladite palette articulée, ménagé au niveau de l'extrémité supérieure de cette dernière, lequel élément de paroi relie les deux flasques latéraux et présente une forme générale en portion de cylindre centrée sur l'axe des orifices desdits flasques latéraux.

L'abreuvoir conforme à l'invention peut être à commande simple ou double. Dans ce dernier cas, l'extrémité avant du corps d'alimentation comporte deux prolongements munis chacun d'un orifice pour la réception d'une palette d'extrémité articulée coopérant chacune avec son propre obturateur mobile.

L'invention sera encore illustrée, sans être aucunement limitée, par la description suivante en relation avec les dessins annexés dans lesquels :
- la figure 1 est une vue en perspective d'un abreuvoir selon l'invention, à commande unique, avec une palette montée articulée au niveau de l'extrémité avant du corps d'alimentation ;
- la figure 2 est une vue en coupe longitudinale des moyens d'alimentation en eau de l'abreuvoir illustré sur la figure 1, équipés de la palette articulée, sans le bol d'abreuvoir ;
- la figure 3 est une vue en perspective d'une variante de réalisation, en forme d'abreuvoir à commande double, avec un corps d'alimentation muni de deux palettes d'extrémité ;
- la figure 4 est une vue en coupe longitudinale des moyens d'alimentation en eau d'un abreuvoir tel qu'illustré sur la figure 1, sans la palette articulée, mais équipés d'une palette à tube montée sur la tige de commande de l'obturateur mobile.

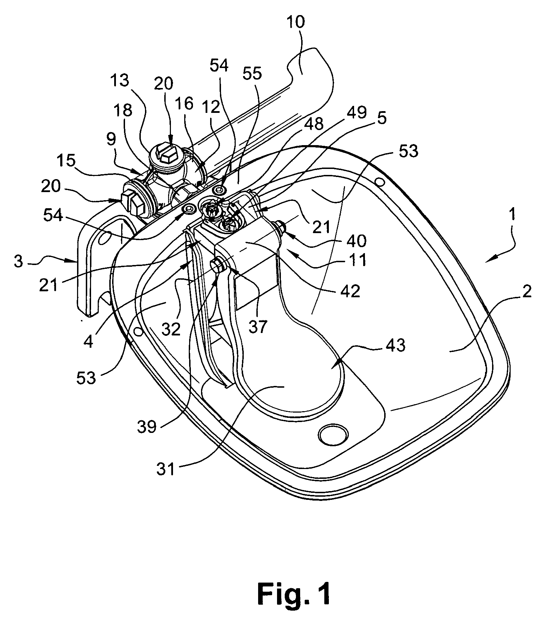

L'abreuvoir 1 illustré sur la figure 1 comprend un bol 2 réalisé en fonte ou en matière plastique moulée, muni :
- de moyens monobloc 3 pour sa fixation sur un support, par exemple un mur, et
- de moyens 4 pour assurer son alimentation en eau.

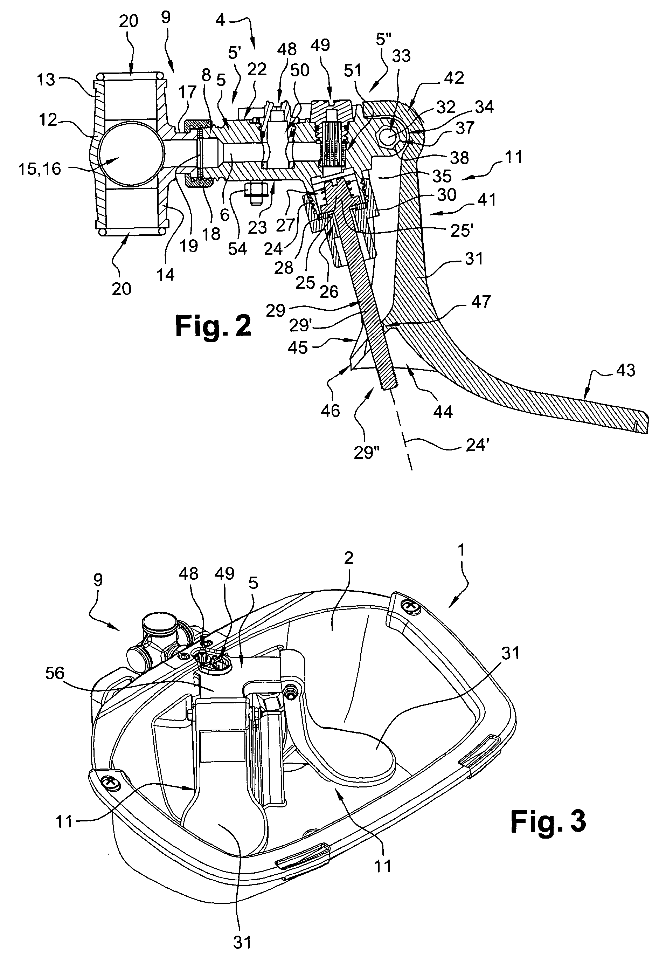

Ces moyens 4 pour l'alimentation en eau sont détaillés sur la figure 2.
Ils consistent en un corps d'alimentation 5, au sein duquel est ménagée une conduite interne 6, équipé, en amont, c'est-à-dire du côté de son extrémité arrière 5', d'un manchon fileté 8 sur lequel vient se visser un dispositif 9 pour le raccordement à une tubulure d'amenée d'eau 10 et, en aval, c'est-à-dire du côté de son extrémité avant 5", d'un dispositif de manoeuvre 11.

Le dispositif de raccordement 9 comprend ici un corps 12 en forme générale de croix qui comporte quatre tubulures d'alimentation 13, 14, 15 et 16 et une tubulure de sortie 17.
La tubulure de sortie 17 vient se connecter sur le manchon fileté 8 du corps d'alimentation 5, par l'intermédiaire d'un écrou 18 monté fou, associé à un joint d'étanchéité 19.
Les tubulures d'alimentation du corps en croix 12 qui ne sont pas raccordées à la ou aux tubulures d'alimentation en eau sont obturées par des bouchons 20.

Le corps d'alimentation 5 consiste en une pièce allongée, ici de section globalement rectangulaire avec deux faces latérales 21, une face de dessus 22 et une face de dessous 23.
Sa conduite interne 6 s'étend depuis le manchon fileté 8, pratiquement sur toute sa longueur. Au niveau de l'extrémité avant 5", cette conduite 6 s'étend vers le bas, pour déboucher par la face de dessous 23, au niveau d'une sortie tubulaire 24, filetée extérieurement, dont l'axe 24' est légèrement incliné vers l'avant, du haut vers le bas.

Le dispositif de manoeuvre 11 est du type à obturateur mobile 25 coopérant avec un orifice 26 ; il est associé à - un ressort de rappel 27, - un joint d'étanchéité 28, et - une tige de commande 29 dont une partie 29' fait saillie vers le bas.

L'orifice 26, au travers duquel s'étend la tige de commande 29, est ménagé dans un manchon 30 vissé sur la sortie tubulaire 24 ; ce manchon 30 permet le maintien de l'ensemble obturateur 25, ressort 27, joint 28 et tige 29 sur le corps d'alimentation 5.

L'obturateur 25 et la tige de commande 29 sont ici réalisés monobloc.

Cette tige de commande 29 s'étend sur l'axe 24' de la sortie 24 ; elle s'étend dans le plan médian du corps d'alimentation 5 et elle est inclinée vers l'avant, du haut vers le bas, par exemple selon un angle compris entre 5 et 30° par rapport à la verticale.

L'obturateur 25 est structuré pour pouvoir basculer autour d'un axe 25', sous l'effet d'une poussée appliquée sur le coté de la partie saillante de tige 29' (c'est-à-dire sous l'effet d'une poussée latérale, décalée angulairement par rapport à l'axe 24').
L'axe de basculement 25' est situé approximativement sur l'obturateur 25 ; plus précisément, il est situé sensiblement sur l'axe 24', juste au dessus de l'orifice 26.

Le ressort de rappel 27, la tige de commande 29 et le manchon 30 sont adaptés pour permettre ce basculement assurant l'alimentation du bol d'abreuvoir par l'orifice 26.
Le ressort de rappel 27 tend à ramener l'obturateur 25 en position de fermeture.

La tige de commande 29 est ici manoeuvrée par une palette 31 qui est montée articulée, et de manière amovible, autour d'un axe horizontal 32 au niveau de l'extrémité avant 5" du corps d'alimentation 5.

Pour cela, l'extrémité avant 5" du corps d'alimentation 5 est traversée par un orifice cylindrique 33 centré sur l'axe 32. Cet orifice 33 traverse toute la largeur du corps d'alimentation 5 et il débouche dans ses deux faces latérales 21. Comme on peut le voir sur la figure 2, l'extrémité avant 5" du corps d'alimentation 5 est conformée en portion de cylindre 34 dont l'enveloppe externe est centrée sur l'axe 32.

D'autre part, la palette 31 est munie de deux flasques latéraux 35 qui sont écartés d'une distance correspondant, au jeu près, à la largeur de l'extrémité avant 5" du corps d'alimentation 5, et qui comportent chacun un orifice 37.
Les deux orifices 37 des flasques latéraux 35 sont disposés coaxialement et lorsqu'ils sont présentés en regard de l'orifice 33 du corps d'alimentation 5, permettent la fixation de la palette 31 au moyen d'un axe traversant 38 constituant le corps d'une vis ou d'une tige filetée 39, maintenue en place par un écrou 40.
Le système vis-écrou 39-40 est agencé pour autoriser l'articulation de la palette 31 autour de l'axe de rotation 32, et pour permettre son démontage.

Entre les deux flasques latéraux 35, la partie supérieure 41 de la palette 31 se prolonge par un élément de paroi 42 qui présente une forme générale en portion de cylindre centrée sur l'axe des orifices 37 et dont la face interne est complémentaire de l'enveloppe externe de la portion de cylindre 34 du corps d'alimentation 5.

La partie supérieure 41 de la palette 31 s'étend vers le bas pratiquement à la verticale ; elle se prolonge par un retour pratiquement à l'équerre 43 formant la partie inférieure de ladite palette 31. Dans une variante de réalisation, la palette peut ne comporter qu'une partie verticale ou sensiblement verticale, et être donc dépourvue du retour à l'équerre 43.

D'autre part, la face arrière 44 de la palette 31 comporte un talon en saillie 45 muni d'une échancrure 46 dans laquelle vient se loger une portion de la hauteur de la partie saillante 29' de la tige de commande 29, et dont le fond 47 forme une butée pour cette partie saillante de tige 29'.

On comprend qu'un appui sur la palette 31 entraîne une poussée sur le coté de la tige de commande 29 et l'ouverture de l'obturateur mobile 25 par basculement autour de son axe 25', pour assurer alors l'alimentation en eau du bol d'abreuvoir 2.
Le ressort spirale 27 assure un retour automatique - de l'obturateur 25 en position de fermeture de l'orifice 26, et - de la palette 31 en position inactive (par la poussée de la tige de commande 29).

Cette poussée sur la partie saillante de tige 29' est réalisée selon une direction sensiblement perpendiculaire à l'axe 24' de ladite tige 29, ou tout au moins faisant un angle non nul avec cet axe 24'.

Sur la figure 2, on remarque que l'extrémité de la partie saillante de tige 29' comporte un filetage 29" pour la fixation démontable, par écrou, d'une palette à tube, en remplacement de la palette articulée 31, comme on le verra plus loin.

Comme on peut le voir encore sur la figure 2, entre le manchon fileté 8 et le dispositif de manoeuvre 11, le corps d'alimentation 5 comporte un dispositif de réglage de débit 48 et un organe de filtration 49.

Le dispositif de réglage de débit 48, placé entre le manchon 8 et l'organe de filtration 49 consiste en une pièce démontable, logée dans un orifice 50 ménagé à partir de la face de dessus 22 du corps d'alimentation 5 et qui débouche dans sa conduite interne 6. Ce dispositif 48 est réglable en rotation entre deux positions de fin de course : l'une de débit maximum et l'autre de fermeture totale de débit.

L'organe de filtration 49 est placé entre le dispositif de réglage de débit 48 et le dispositif de manoeuvre 11. Il est structuré pour retenir les éventuelles particules indésirables contenues dans l'eau. Cet organe de filtration 49 consiste en une pièce démontable logée dans un orifice 51 ménagé à partir de la face de dessus 22 du corps d'alimentation 5 et qui débouche dans sa conduite interne 6. Dans le mode de réalisation illustré, l'orifice 51 de réception de l'organe de filtration 49 s'étend perpendiculairement à l'axe de la conduite interne 6 et pratiquement en regard de l'orifice 26 associé à l'obturateur mobile 25.

Pour son maintien, le corps d'alimentation 5 est positionné dans un orifice ménagé dans la paroi arrière 53 du bol d'abreuvoir 2. Il est solidarisé avec ce dernier au moyen de deux systèmes vis-écrou 54 qui viennent se loger dans des orifices en correspondance ménagés dans le corps d'alimentation 5 et au travers du rebord arrière 55 du bol 2.

Le dispositif de raccordement 9 est monté à l'arrière du corps d'alimentation 5 après que ce dernier ait été positionné dans l'orifice du bol d'abreuvoir 2. L'ensemble du mécanisme d'alimentation 4 peut être déposé ou remonté alors que le bol 2 reste fixé sur son support.

La figure 3 illustre un abreuvoir à commande double, conforme à l'invention, avec un corps d'alimentation 5 dont l'extrémité avant est en forme générale de Y pour former deux prolongements 56 permettant chacun la réception d'un dispositif de manoeuvre 11 identique à celui décrit en relation avec les figures 1 et 2.

Les deux prolongements 56 du corps d'alimentation 5 sont munis chacun d'un orifice pour la réception démontable d'une palette d'extrémité articulée 31, coopérant chacune avec son propre obturateur mobile, par l'intermédiaire d'une partie saillante de tige 29'.
Les plans d'actionnement des deux palettes 31 sont décalés angulairement d'un angle de l'ordre de 90°. En amont des deux prolongements 56, on retrouve le dispositif de réglage de débit 48 et l'organe de filtration 49, placés tous deux sur la conduite interne 6.

D'une manière générale, le fait que la palette 31 soit portée de manière démontable par le corps d'alimentation 5 permet de la changer à volonté, par exemple par une palette à terminaison verticale, ou encore par une palette à tube montée sur la partie saillante de tige 29', comme décrit ci-après.

Le type de poussoir étant différent suivant la morphologie des animaux, leur âge et leur race, l'éleveur peut alors conserver son abreuvoir et y changer seulement la partie palette poussoir qui reste peu coûteuse.

De plus, lors de la casse d'un bol, l'ensemble nécessaire solidaire de son système de poussoir reste facile à changer.
Enfin, cette particularité diminue le nombre de références de pièces détachées pour le distributeur, et limite par la même occasion les risques d'erreur.

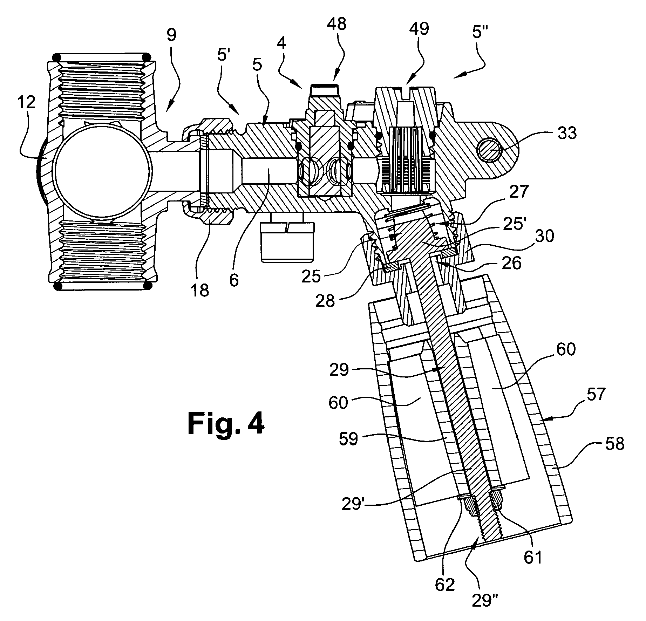

La figure 4 est une vue en coupe du corps d'alimentation d'un abreuvoir conforme à l'invention dans lequel la palette articulée 31 a été enlevée, remplacée par une palette à tube 57 montée sur la tige de commande 29 et plus particulièrement sur sa partie saillante 29'.

La palette à tube 57 consiste en une partie sensiblement cylindrique extérieure 58, solidaire d'un cylindre intérieur 59 par l'intermédiaire d'entretoises radiales 60.
Le cylindre intérieur 59 a un diamètre intérieur qui correspond, au jeu près, au diamètre extérieur de la partie saillante 29' de la tige 29 ; et il est emmanché sur cette dernière, maintenu par un écrou 61 vissé sur le filetage d'extrémité 29" précité.

L'écrou 61 forme une butée amovible pour le maintien en position de la palette à tube 57 ; il est associé à une rondelle 62.

Dans ce cas, une poussée sur le côté du cylindre extérieur 58 assure encore le basculement de l'obturateur 25 autour de son axe 25' et l'alimentation en eau de l'abreuvoir par l'intermédiaire de l'orifice 26 du manchon 30.
L'eau passe alors entre les deux cylindres 58 et 59 de la palette à tube ; les ailettes radiales 60 assurent une fonction complémentaire de brise jet.

On notera que tout autre moyen approprié peut être utilisé pour fixer la palette à tube 57 sur la tige 29 ; il est par exemple possible de prévoir un simple orifice traversant ménagé au niveau de la partie inférieure de la tige 29, permettant le positionnement d'une goupille rapportée.

Les caractéristiques structurelles de l'invention permettent donc l'obtention d'un abreuvoir polyvalent, comportant soit une palette à tube 57, soit une palette articulée 31, configurable selon le type d'animal concerné.

## Revendications

1. Abreuvoir automatique pour bétail comprenant un bol (2) muni de moyens de fixation (3) sur un support et de moyens (4) pour assurer son alimentation en eau, lesquels moyens d'alimentation en eau (4) comprennent un corps (5) définissant une conduite interne d'alimentation (6), lequel corps (5) est équipé, au niveau de son extrémité arrière (5'), située à l'extérieur dudit bol (2), d'un dispositif de raccordement (9) à une tubulure d'amenée d'eau (10), et au niveau de son extrémité avant (5"), située dans ledit bol (2) ou au-dessus de celui-ci, d'au moins un dispositif de manoeuvre (11) du type à obturateur mobile (25) associé à - un ressort de rappel (27), - un joint d'étanchéité (28), et - une tige de commande (29), l'extrémité avant (5") dudit corps (5) étant encore munie de moyens pour la réception articulée, autour d'un axe horizontal (32), d'une palette (31) d'actionnement de ladite tige de commande (29), **caractérisé en ce que** ladite tige de commande (29) comporte une partie (29') qui fait saillie vers le bas, hors dudit corps d'alimentation (5), laquelle partie (29') est apte à basculer autour d'un axe (25') situé approximativement sur ledit obturateur mobile (25) pour assurer l'ouverture de ce dernier lors d'une poussée appliquée sur le côté de ladite partie saillante de tige (29'), ladite partie saillante de tige (29') comportant des moyens (29") pour la fixation amovible d'une palette à tube (57), et les moyens (39, 40) de fixation de ladite palette articulée (31) étant également amovibles, pour permettre l'utilisation, au choix, soit d'une palette à tube (57), soit d'une palette articulée (31), pour l'actionnement dudit obturateur mobile (25).

2. Abreuvoir selon la revendication 1, **caractérisé en ce que** la partie saillante (29') de la tige (29) comporte une extrémité libre munie d'un filetage (29") pour permettre la fixation de la palette à tube (57) par un écrou (61).

3. Abreuvoir selon l'une quelconque des revendications 1 ou 2, **caractérisé en ce que** la face arrière de la palette articulée (31) est équipée d'une butée (47) apte à venir coopérer avec la partie saillante de tige (29'), pour assurer son basculement en vue d'ouvrir l'obturateur (25) lors d'une poussée appliquée sur ladite palette (31), en particulier par le bétail.

4. Abreuvoir selon la revendication 3, **caractérisé en ce que** la butée (47) de la palette articulée (31) est constituée par le fond d'une échancrure (46) réalisée dans un talon monobloc (45) ménagé au niveau de la face arrière (44) de ladite palette (31).

5. Abreuvoir selon l'une quelconque des revendications 1 à 4, **caractérisé en ce que** la tige de commande (29) s'étend de manière inclinée par rapport à la verticale, en direction de la partie inférieure (43) de la palette articulée (31), l'inclinaison correspondante étant comprise entre 5 et 30°.

6. Abreuvoir selon l'une quelconque des revendications 1 à 5, **caractérisé en ce que** le corps d'alimentation (5) comporte un orifice (33) d'axe (32) horizontal, traversant toute sa largeur au niveau de son extrémité avant (5"), et **en ce que** ladite palette (31) comporte deux flasques latéraux (35) parallèles, écartés d'une distance correspondant, au jeu près, à ladite largeur de l'extrémité avant (5") du corps d'alimentation (5), et munis chacun d'un orifice (37) en vis-à-vis qui s'étendent coaxialement, pour assurer le montage articulé de ladite palette (31) sur ledit corps d'alimentation (5), au moyen d'un axe (38) s'étendant au travers desdits orifices de palette (37) et dudit orifice de corps d'alimentation (33), disposés coaxialement.

7. Abreuvoir selon la revendication 6, **caractérisé en ce que** l'axe (38) de montage de la palette (31) sur le corps d'alimentation (5), consiste en un corps de vis d'un système de fixation type vis-écrou (39, 40).

8. Abreuvoir selon l'une quelconque des revendications 6 ou 7, **caractérisé en ce qu'**il comporte un corps d'alimentation (5) de section générale rectangulaire, muni de deux faces latérales (21), d'une face de dessus (22) et d'une face de dessous (23), l'orifice (33) de fixation de la palette (31) étant ménagé au travers desdites faces latérales (21).

9. Abreuvoir selon l'une quelconque des revendications 6 à 8, **caractérisé en ce que** l'extrémité avant (5") du corps d'alimentation (5) est en forme de portion de cylindre (34) centrée sur l'axe (32) de l'orifice traversant (33) assurant la fixation de la palette (31), laquelle portion de cylindre (31) est au moins partiellement recouverte par un élément de paroi (42) de la palette articulée (31), ménagé au niveau de l'extrémité supérieure (41) de cette dernière, lequel élément de paroi (42) relie les deux flasques latéraux (35) et présente une forme générale en portion de cylindre centrée sur l'axe des orifices (37) desdits flasques latéraux (35).

10. Abreuvoir selon l'une quelconque des revendications 1 à 9, **caractérisé en ce qu'**il comporte un corps d'alimentation (5) dont l'extrémité avant comporte deux prolongements (56) munis chacun d'un orifice pour la réception d'une palette d'extrémité articulée (31) coopérant chacune avec son propre obturateur mobile, pour obtenir un abreuvoir à double dispositif de manoeuvre (11).

## Patentansprüche

1. Automatische Tränke für Vieh mit einer Schlüssel (2) mit Mitteln (3) zum Befestigen auf einer Abstützung und mit Mitteln (4) zum Sicherstellen von deren Versorgung mit Wasser, wobei die Mittel (4) zum Versorgen mit Wasser einen eine innere Versorgungsleitung (6) definierenden Körper (5) aufweisen, wobei der Körper (5) im Bereich von dessen hinterem, außerhalb der Schlüssel (2) gelegenem Ende (5') mit einer Vorrichtung (9) zum Anschließen an ein Wasserzulaufrohr (10) und im Bereich von dessen vorderem, innerhalb der Schlüssel (2) oder oberhalb derselben gelegenen Ende (5") mit einer Betätigungsvorrichtung (11) vom Typ eines beweglichen Verschlußelements (25), das - einer Rückholfeder (27), - einem Dichtring (28) und - einer Betätigungsstange (29) zugeordnet ist, versehen ist, wobei das vordere Ende (5") des Körpers (5) noch mit Mitteln zum um eine horizontale Achse (32) gelenkigen Aufnehmen eines Drehschiebers (31) zum Betätigen der Betätigungsstange (29) versehen ist, **dadurch gekennzeichnet, daß** die Betätigungsstange (29) einen Teil (29') aufweist, der nach unten nach außerhalb des Versorgungskörpers (5) vorsteht, wobei der besagte Teil (29') dazu geeignet ist, um eine Achse (25') zu schwenken, die ungefähr auf dem beweglichen Verschlußelement (25) angeordnet ist, um ein Öffnen des letzteren sicherzustellen, wenn ein Schub auf der Seite des vorstehenden Teils (29') der Stange ausgeübt wird, wobei der vorstehende Teil (29') Mittel (29") zur lösbaren Befestigung eines Drehschiebers aus Rohr (57) aufweist, und wobei die Mittel (39, 40) zur Befestigung des angelenkten Drehschiebers (31) ebenfalls abnehmbar sind, um eine wahlweise Verwendung eines Drehschiebers aus Rohr (57) oder eines angelenkten Drehschiebers (31) zum Betätigen des beweglichen Verschlußelements (25) zu ermöglichen.

2. Viehtränke gemäß Anspruch 1, **dadurch gekennzeichnet, daß** der vorstehende Teil (29') der Stange (29) ein freies Ende aufweist, das mit einem Gewinde (29") versehen ist, um eine Befestigung des Drehschiebers aus Rohr (57) durch eine Mutter (61) zu ermöglichen.

3. Viehtränke gemäß einem der Ansprüche 1 oder 2, **dadurch gekennzeichnet, daß** die Rückseite des angelenkten Drehchiebers (31) einen Anschlag (47) aufweist, der geeignet ist, mit dem vorstehenden Teil (29') der Stange zusammenzuwirken, um dessen Schwenken zwecks Öffnens des Verschlußelements (25) sicherzustellen, wenn ein Schub auf den Drehschieber (31), insbesondere durch das Vieh, ausgeübt wird.

4. Viehtränke gemäß Anspruch 3, **dadurch gekennzeichnet, daß** der Anschlag (47) des angelenkten Drehschiebers (31) durch den Boden einer Ausnehmung (46) gebildet ist, die in einem einstückig an der Rückseite (44) des besagten Drehschiebers (31) ausgebildeten Absatz (45) gefertigt ist.

5. Viehtränke gemäß einem der Ansprüche 1 bis 4, **dadurch gekennzeichnet, daß** sich die Betätigungsstange (29) schräg zur Senkrechten in Richtung auf den unteren Teil (43) des angelenkten Drehschiebers (31) erstreckt, wobei die entsprechende Neigung zwischen 5 und 30° beträgt.

6. Viehtränke gemäß einem der Ansprüche 1 bis 5, **dadurch gekennzeichnet, daß** der Versorgungskörper (5) ein Loch (33) mit horizontaler Achse (32) aufweist, das diesen auf dessen gesamter Breite durchquert, und daß der besagte Drehschieber (31) zwei seitliche parallele Flansche (35) aufweist, die zueinander in einem Abstand sind, der bis auf die Toleranz der Breite des vorderen Endes (5") des Versorgungskörpers (5) entspricht, und von denen jeder ein Loch (37) aufweist, das dem anderen gegenüber liegt und die sich koaxial erstrecken, um die gelenkige Anbringung des Drehschiebers (31) am Versorgungskörper (5) mittels einer sich durch die Löcher (37) des Drehschiebers und das Loch (33) des Versorgungskörpers, die koaxial angeordnet sind, zu ermöglichen.

7. Viehtränke gemäß Anspruch 6, **dadurch gekennzeichnet, daß** die Achse (38) für das Anbringen des Drehschiebers (31) auf dem Versorgungskörper (5) aus einem Schraubenkörper eines Befestigungssystems vom Typ Schraube-Mutter (39, 40) besteht.

8. Viehtränke gemäß einem der Ansprüche 6 oder 7, **dadurch gekennzeichnet, daß** sie einen Versorgungskörper (5) mit einem im Allegemeinen rechteckigen Querschnitt aufweist, der zwei Seitenflächen (21), eine obere Fläche (22) und eine untere Fläche (23) hat, wobei das Loch (33) zum Anbringen des Drehschiebers (31) durch die Seitenflächen (21) hindurch ausgebildet ist.

9. Viehtränke gemäß einem der Ansprüche 6 bis 8, **dadurch gekennzeichnet, daß** das vordere Ende (5") des Versorgungskörpers (5) die Form eines Zylinderabschnitts (34) hat, der zur Achse (32) des die Anbringung des Drehschiebers (31) sicherstellenden Durchgangslochs (33) zentrisch ist, wobei der Zylinderabschnitt (34) wenigstens teilweise von einem Wandelement (42) des angelenkten Drehschiebers (31) bedeckt ist, das im Bereich des oberen Endes (41) des letzteren ausgebildet ist, wobei das Wandelement (42) die beiden seitlichen Flansche (35) verbindet und eine allgemeine Form eines auf die Achse der Löcher (37) der seitlichen Flansche (35) zentrierten Zylinderabschnitts hat.

10. Viehtränke gemäß einem der Ansprüche 1 bis 9, **dadurch gekennzeichnet, daß** sie einen Versorgungskörper (5) aufweist, dessen vorderes Ende zwei Verlängerungen (56) aufweist, von denen jede ein Loch für die Aufnahme eines Drehschiebers mit angelenktem Ende aufweist, von denen jeder mit seinem eigenen beweglichen Verschlußelement zusammenwirkt, um eine Tränke mit doppelter Betätigungsvorrichtung (11) zu erhalten.

## Claims

1. An automatic drinking trough for livestock comprising a bowl (2) provided with means (3) for the fixation to a support and means (4) for ensuring the supply thereof with water, wherein the water supply means (4) comprise a body (5) defining an internal supply line (6), wherein the body (5) is equipped, at its rear end (5'), located outside said bowl (2), with a device (9) for the connection to a water feeding tubing (10), and at its front end (5"), located inside said bowl (2) or above the latter, with at least one operating device (11) of the mobile shutter type (25) associated with - a return spring (27), - a sealing gasket (28), and - a control rod (29), the front end (5") of said body (5) being also provided with means for the articulated reception, about a horizontal axis (32), of a plate (31) for actuating said control rod (29), **characterized in that** said control rod (29) has a part (29') protruding downward, out of said supply body (5), wherein the part (29') is adapted to swing about an axis (25') located approximately on said mobile shutter (25) to ensure the opening of the latter when a thrust is applied on the side of said protruding rod part (29'), said protruding rod part (29') including means (29") for the removable fixation of a tube plate (57), and the means (39, 40) for the fixation of said articulated plate (31) being also removable, to allow the use, selectively, either of a tube plate (57) or of an articulated plate (31), for the actuation of said mobile shutter (25).

2. The drinking trough according to claim 1, **characterized in that** the protruding part (29') of the rod (29) includes a free end provided with a thread (29") to allow the fixation of the tube plate (57) by a nut (61).

3. The drinking trough according to any one of claims 1 or 2, **characterized in that** the rear face of the articulated plate (31) is equipped with a stop (47) adapted to cooperate with the protruding rod part (29'), to ensure the swinging thereof in order to open the shutter (25) when a thrust is applied to said plate (31), in particular by the livestock.

4. The drinking trough according to claim 3, **characterized in that** the stop (47) of the articulated plate (31) is consisted by the bottom of a notch (46) made in a single-piece heel (45) provided at the rear face (44) of said plate (31).

5. The drinking trough according to any one of claims 1 to 4, **characterized in that** the control rod (29) extends in an inclined manner with respect to the vertical, towards the lower part (43) of the articulated plate (31), the corresponding inclination being comprised between 5 and 30°.

6. The drinking trough according to any one of claims 1 to 5, **characterized in that** the supply body (5) includes an orifice (33) of horizontal axis (32), going through the whole width thereof at the front end (5") thereof, and **in that** said plate (31) includes two parallel lateral flanges (35), spaced apart by a distance corresponding, to within the clearance, to said width of the front end (5") of the supply body (5), and each provided with an orifice (37) located opposite to each other and extending coaxially, to ensure the articulated mounting of said plate (31) to said supply body (5), by means of an axis (38) extending through said plate orifices (37) and said supply body orifice (33), arranged coaxially to each other.

7. The drinking trough according to claim 6, **characterized in that** the axis (38) for the mounting of the plate (31) to the supply body (5) consists in a screw body of a fixation system (39, 40) of the screw-nut type.

8. The drinking trough according to any one of claims 6 or 7, **characterized in that** it includes a supply body (5) of generally rectangular cross-section, provided with two lateral faces (21), a top face (22) and a bottom face (23), the orifice (33) for the fixation of the plate (31) being formed through said lateral faces (21).

9. The drinking trough according to any one of claims 6 to 8, **characterized in that** the front end (5") of the supply body (5) has the shape of a cylinder portion (34) centred to the axis (32) of the through-orifice (33) ensuring the fixation of the palette (31), wherein the cylinder portion (34) is at least partially covered with a wall element (42) of the articulated plate (31), formed at the upper end (41) of the latter, wherein the wall element (42) links the two lateral flanges (35) and has the general shape of a cylinder portion centred to the axis of the orifices (37) of said lateral flanges (35).

10. The drinking trough according to any one of claims 1 to 9, **characterized in that** it includes a supply body (5) whose front end has two extensions (56) each provided with an orifice for receiving an articulated end plate (31) each cooperating with its own mobile shutter, to obtain a drinking trough with a double operating device (11).
